## Europäisches Patentamt

## European Patent Office

## Office européen des brevets

(19)

(11) Veröffentlichungsnummer: **0 063 685**
**B1**

(12) **EUROPÄISCHE PATENTSCHRIFT**

(45) Veröffentlichungstag der Patentschrift:
11.06.86

(51) Int. Cl.⁴: **G 01 F 23/14**, G 01 F 23/62

(21) Anmeldenummer: **82101892.6**

(22) Anmeldetag: **10.03.82**

(54) **Flüssigkeitsstand-Messsystem.**

(30) Priorität: **27.04.81 US 257741**

(43) Veröffentlichungstag der Anmeldung:
**03.11.82 Patentblatt 82/44**

(45) Bekanntmachung des Hinweises auf die Patenterteilung:
**11.06.86 Patentblatt 86/24**

(84) Benannte Vertragsstaaten:
**DE FR GB IT NL**

(56) Entgegenhaltungen:
**DE - B - 1 185 830**
**DE - B - 1 235 016**
**GB - A - 1 479 421**
**GB - A - 2 000 871**
**US - A - 3 703 246**
**US - A - 3 853 006**

(73) Patentinhaber: **ITT INDUSTRIES INC., 320 Park Avenue, New York, NY 10022 (US)**

(72) Erfinder: **Lawford, Victor Nicholas, 535 South Los Robles Avenue, Pasadena, California (US)**

(74) Vertreter: **Graf, Georg Hugo, Dipl.-Ing. et al, c/o Standard Elektrik Lorenz AG Patent- und Lizenzwesen Postfach 300 929 Kurze Strasse 8, D-7000 Stuttgart 30 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER. STOCKHOLM 1986

## Beschreibung

Die Erfindung betrifft ein Flüssigkeitsstand-Meßsystem für geschlossene Behälter mit einem in Höhe des unteren Bereiches des Behälters angeordneten Differenzdruck-Meßgerät, an das ein Anzeigegerät zum Anzeigen von Meßwerten angeschlossen ist und das über eine Leitung - eine sogenannte "Bezugssäule" - mit einem in Höhe des oberen Bereiches des Behälters angeordneten Sensorgehäuse verbunden ist, das durch eine Balgfeder in eine erste Kammer und eine zweite Kammer unterteilt ist, wobei die zweite Kammer und die in diese einmündende, zum Differenzdruck-Meßgerät führende Leitung mit einer inkompressiblen Flüssigkeit gefüllt sind. (US-A- 3 856 006).

Der Wasserspiegel in Boilern und in druckfesten Tanks bzw. Behältern wird oft durch ein Differenzdruck-Meßgerät gemessen, wie dies beispielsweise in den US-A-2 632 474 und US-A-2 664 749 beschrieben ist. Das Differenzdruck-Meßgerät ist über externe Leitungen oder Rohre mit dem unteren und dem oberen Teil eines Tanks verbunden. Die Leitung, die zu dem oberen Teil des Tanks führt, enthält einen Sensor, der oft in der Art eines geschlossenen Niveaugefäßes ausgeführt ist. Die Leitung, die von dem Sensorgehäuse zum Differenzdruck-Meßgerät führt, ist mit Wasser gefüllt und weist ein konstantes Niveau auf. Sie wird auch als "Bezugssäule" bezeichnet. Diese Bezugssäule weist im wesentlichen die Temperatur der Umgebung auf und versorgt die eine Seite des Differenzdruck-Meßgerätes mit einem konstanten hydrostatischen Druck. Der im Tank befindliche Dampfdruck wirkt über die Bezugssäule ebenfalls auf die genannte eine Seite des Differenzdruck-Meßgerätes. An der anderen Seite des Differenzdruck-Meßgerätes wird der hydraulische Druck des Wassers und der Dampfdruck in dem Tank ermittelt. Da der Dampfdruck in dem Tank an beiden Seiten des Differenzdruck-Meßgerätes anliegt, hebt sich seine Wirkung auf, so daß, wenn der Wasserspiegel sich ändert, die Größe und die Richtung der Änderung des Niveaus angezeigt wird.

Ein Nachteil des vorher erwähnten Systems ist ein möglicher Verlust von Wasser in der Leitung, die mit dem Differenzdruck-Meßgerät gekoppelt ist. Dieser Verlust von Wasser kann durch ein Leck in der Leitung, an den Dichtungen des Niveaugefäßes oder des Differenzdruck-Meßgerätes entstehen. Das plötzliche Absinken des Druckes in dem Tank bewirkt eine Verfälschung bzw. eine ungenügende Füllung des Rohres während des Hochfahrens des Systems. Der Verlust von Wasser bewirkt weiterhin, daß das Differenzdruck-Meßgerät fehlerhafte Signale aussendet. Diese Signale zeigen z.B. an, daß der Wasserstand im Tank zunimmt, wogegen der Wasserstand im Tank aber tatsächlich fällt.

Es wird noch auf die Systeme zur Kontrolle des Flüssigkeitsstandes verwiesen, die in der US-A-3 853 006 und der US-A-4 332 166 (veröffentlicht nach dem Anmeldetag) mit dem Titel "Temperatur-Kompensations-Apparat für eine mit Flüssigkeit gefüllte Leitung" beschrieben sind. In diesen Druckschriften wird eine Balgfeder in einem abgeschlossenen Topf verwendet. Diese Balgfeder in dem vorgenannten System bildet das obere Ende der mit Bezugssäule bezeichneten Leitung. Wenn diese Leitung Wasser verliert, ergibt sich ein hoher Differenzdruck gegenüber dem Inneren der Balgfeder, was bewirken kann, daß die Balgfeder zusammenfällt bzw. zerreißt. Dies wiederum kann in der Flüssigkeit im Tank oder in einem geschlossenen Gehäuse, die giftig oder anderweitig gefährlich sein kann, bewirken, daß diese Flüssigkeit durch ein Loch in der Leitung sickert.

Es ist deshalb die Aufgabe der Erfindung, ein Flüssigkeitsstand-Meßsystem zu schaffen, das umweltfreundlich und sicher ist und Mittel vorsieht, die für den Fall der Zerstörung der Balgfeder und der Bezugssäule die Eintrittsöffnung für die Bezugssäule verschließt, so daß die in dem Tank befindliche, eventuell aggressive oder giftige Flüssigkeit nicht über ein Loch in der Bezugssäule austreten kann. Gleichzeitig soll für diesen Fall ein Alarm ausgelöst werden, der den Defekt an dem System anzeigt.

Diese Aufgabe wird wie im Patentanspruch 1 angegeben gelöst. Vorteilhafte Weiterbildungen der Erfindung sind, den Unteransprüchen enthalten.

Durch die erfindungsgemäße Ausführung ergibt sich der große Vorteil, daß bei einem Defekt das System durch sofortigen Verschluß der Mittelbohrung, durch die die Bezugssäule in das Sensorgehäuse mündet, keine in dem Tank befindliche Flüssigkeit, die giftig oder aggressiv sein kann, aus einem Loch in der Bezugssäule austreten kann. Zusätzlich wird durch das Absenken des Schwimmers, das dem Verschließen der Mittelbohrung unmittelbar vorausgeht, durch das Schalten eines Kontaktpaares ein Alarm ausgelöst, der den Defekt des Systems dem Bedienungspersonal anzeigt.

Ein Ausführungsbeispiel der Erfindung ist in den Zeichnungen dargestellt und wird anschließend beschrieben. In den Zeichnungen zeigen:

Fig. 1 ein bekanntes Flüssigkeitsstand-Meßsystem in schematischer Darstellung,

Fig. 2 ein Flüssigkeitsstand-Meßsystem nach der Erfindung, das eine Alarmeinrichtung enthält, mit einem Schwimmer in einem Sensorgehäuse, der in der oberen Normalstellung gezeichnet ist, in schematischer Darstellung,

Fig. 3 einen Sensor nach Fig. 2 mit dem Schwimmer, der sich in einer unteren abgesenkten Position befindet, nachdem in dem Rohr der Bezugssäule des Systems ein Flüssigkeitsverlust aufgetreten ist, senkrecht geschnitten dargestellt.

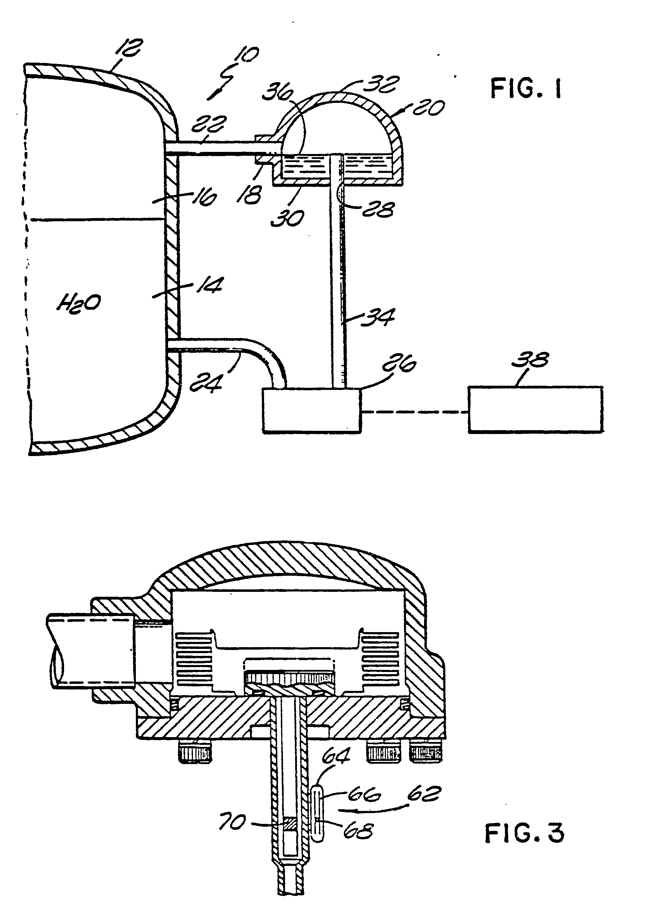

In Fig. 1 der Zeichnungen ist ein bekanntes Flüssigkeitsstand-Meßsystem 10 schematisch dargestellt, wie es eingangs beschrieben worden ist. Das System besteht aus einem Tank oder Behälter 12, in dem sich im unteren Teil Wasser 14 und im oberen Teil Dampf 16 befindet. Die Einlaßöffnung 18 eines geschlossenen Niveaugefäßes 32 oder Sensors 20 ist mit dem oberen Teil des Tanks 12 über eine Leitung 22 verbunden. Der untere Teil des Tanks 12 ist über eine Leitung 24 mit der einen Seite eines Differenzdruck-Meßgerätes 26 verbunden. In der Grundplatte 30 des Sensorgehäuses 32 befindet sich eine Mittelbohrung 28. Von der anderen Seite des Differenzdruck-Meßgerätes 26 führt eine senkrecht stehende Leitung 34 durch die Mittelbohrung 28 in das Sensorgehäuse 32 bis zu einem Flüssigkeitshöchststand in Höhe der Leitung 22. Die Leitung 34 ist mit Wasser 36 gefüllt und der untere Teil des Sensorgehäuses 32 ist mit kondensiertem Wasser bis zur Einmündung der Leitung 22 gefüllt, dadurch liegt ein konstanter hydrostatischer Druck an der anderen Seites des Differenzdruck-Meßgerätes 26 an. Die Leitungen 22, 24 und 34 sind vorzugsweise als Kapillarrohre ausgebildet.

Ein Anzeigegerät 38 ist an das Differenzdruck-Meßgerät 26 angeschlossen, um den Differenzdruck innerhalb der Rohre 22 und 24 anzuzeigen. Das Differenzdruck-Meßgerät 26 und das Anzeigegerät 38 sind beide handelsüblich. Wenn gewünscht, kann an den Ausgang des Differenzdruck-Meßgerätes 26 sowohl der Anschluß einer Prozeß-Steuerung als auch der Anschluß für eine Anzeige des Flüssigkeitsstandes in dem Tank 12 vorgesehen werden.

Wie bereits vorher beschrieben, können im Differenzdruck-Meßgerät 26 Fehlersignale entstehen, wenn es passiert, daß in der Bezugssäule 34 ein Wasserverlust entsteht.

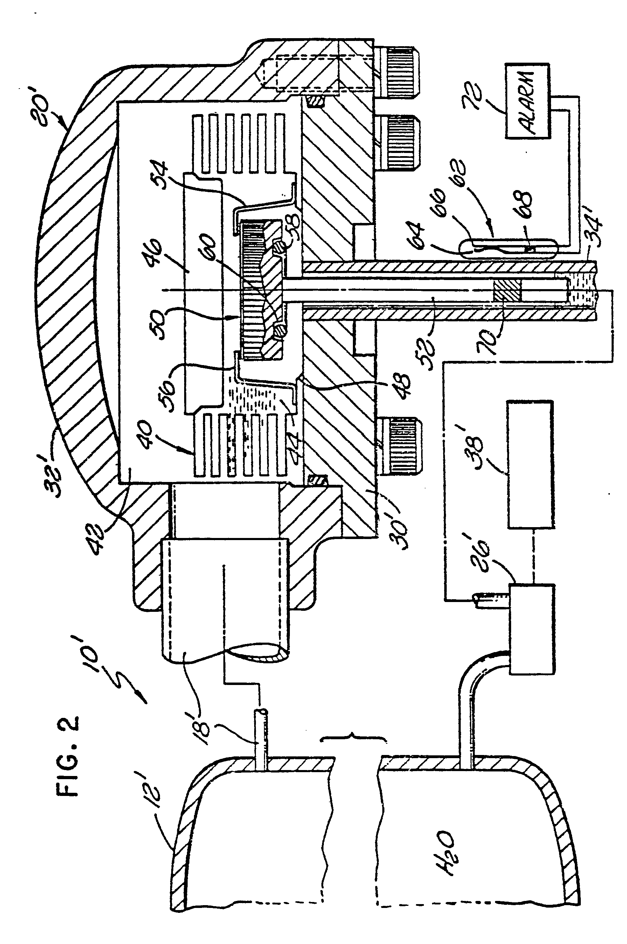

In den Fig. 2 und 3 der Zeichnungen, die ein Flüssigkeitsstand-Meßsystem mit einer neuen Alarm-Anordnung nach der vorliegenden Erfindung zeigt, wird solch ein Verlust von Flüssigkeit angezeigt, so daß Korrektur-Maßnahmen, beispielsweise für die Werte für eine angeschlossene Prozeß-Steuerung getroffen werden können. Die in den Fig. 2 und 3 dargestellten Teile sind dieselben oder ähnlich denen, die bisher bereits in Fig. 1 dargestellt und beschrieben worden sind. Sie sind deshalb mit denselben Bezugszeichen und einem zusätzlichen Strich versehen. Aus diesem Grund wird für diese Teile die Beschreibung nicht wiederholt. Das System 10' nach der vorliegenden Erfindung ist im wesentlichen identisch mit dem in Fig. 1 beschriebenen System 10, ausgenommen den Sensor 20'. Das obere Ende der Leitung 34' wird durch die Grundplatte 30' des Sensorgehäuses 32' begrenzt. Ein bewegliches, auf Druck ansprechendes Hindernis, z.B. eine Membran, ist in dem Gehäuse 32' des Sensors 20' vorgesehen, die das Gehäuse 32' in zwei separate Kammern 42 und 44 trennt. Vorzugsweise weist die Membran die Form einer Balgfeder 40 auf, mit einem oberen, beweglichen, freien Ende 46 und einem unteren Ende, das zu einem Lippenrand 48 geformt ist, der beispielsweise durch Schweißen mit der Grundplatte 30' des Gehäuses 32' flüssigkeitsdicht verbunden ist. Auf diese Weise wird erreicht, daß die erste Kammer 42 innerhalb des Gehäuses 32' außerhalb der Balgfeder 40 mit dem oberen Teil des Tanks 12' über die Leitung 18' und die zweite Kammer 44 innerhalb der Balgfeder 40 mit dem Inneren der Leitung 34' und somit auch mit dem Differenzdruck-Meßgerät 26 in stetiger Verbindung steht. Das Innere der Balgfeder 40 und der Leitung 34' ist mit einer inkompressiblen Flüssigkeit gefüllt und bildet die Bezugssäule innerhalb des Systems.

Ein Schwimmer 50 ist innerhalb der Balgfeder 40, in der zweiten Kammer 44, frei beweglich montiert. Der Schwimmer 50 kann aus irgendeinem geeigneten Material hergestellt sein, das eine geringere Dichte hat als die Flüssigkeit innerhalb der Balgfeder und der Bezugssäule. Beispielsweise besteht der Schwimmer 50 aus einem leichten dünnwandigen Metallgehäuse aus rostfreiem Stahl, das mit einem geschäumten Kunststoff ausgefüllt und somit verstärkt ist, um den Schwimmer 50, widerstandsfähig gegenüber hohem Druck zu machen. Am Schwimmer 50 ist ein von diesem wegstehender Stift 52 befestigt, der in den oberen Teil der Leitung 34 frei beweglich eintaucht. Oberhalb der Lippe 48 der Balgfeder 40 ist ein Käfig 54 befestigt. Der Käfig 54 weist einen oberen, nach innen gerichteten Flansch 56 auf, der so weit vorgezogen ist, daß er über den oberen Teil des Schwimmrs 50 an diesem anliegt und damit die Auftriebsbewegung des Schwimmers 50 begrenzt und diesen vor Zerstörung schützt, wenn die Balgfeder 40 sich ausdehnt oder sich zusammenzieht. Ein weichelastischer O-Ring 58 ist mit einem Teil seines Querschnittes in einer kreisrunden Rille oder Nut 60 am Boden des Schwimmers 50 und mittig zu der Leitung 34' befestigt.

Auf diese Weise wird, wenn der Schwimmer 50 in die in Fig. 3 gezeichnete Lage absinkt, z.B. infolge des Zerbrechens der Bezugssäule, die durch die Leitung 34' gebildet wird, und dem darauf basierenden Verlust von Wasser in der Bezugssäule, das obere Ende der Bezugssäule bzw. der Leitung 34', durch das Aufliegen des Schwimmers 50 mit dem weichelastischen O-Ring 58 auf der Innenseite der Grundplatte 30' des Gehäuses 32', gegenüber dem Inneren des Sensor-Gehäuses 32' abgedichtet. Dies ist von großer Bedeutung für den Fall, daß die Balgfeder 40 zerreißt, was zur Folge haben kann, daß gefährliche Tankflüssigkeit aus der zerbrochenen Leitung 34' fließen könnte, wenn diese nicht am oberen Ende durch den weichelastischen O-Ring 58 abgedichtet würde.

Ein Schalter 62 ist außerhalb der Leitung 34' nahe dem vom Schwimmer 50 wegstehenden Stift 52 befestigt. Der Schalter 62 besteht aus einem beweglichen Kontakt 64, einem festen Kontakt 66 und einer Feder 68. Der bewegliche Kontakt 64 wird normalerweise von der Anlage an dem festen Kontakt 66 durch eine Feder 68 weggedrückt, gezeigt ist. Dieser Schalter 62 ist vorzugsweise ein sogenannter Reed-Schalter, der aus magnetisierbaren Zungen besteht, die in einem Gehäuse dicht verschlossen sind. Der Schalter 62 wird betätigt durch einen Magnet 70, der an dem vom Schwimmer 50 wegstehenden Stift 52 befestigt ist.

Die Leitung 34' und die Balgfeder 40 sind mit Wasser gefüllt, wodurch sich der Schwimmer 50 in der obersten Stellung befindet, wie in Fig. 2 dargestellt. In dieser Stellung des Schwimmers 50 wirkt das Kraftfeld, das von dem Magneten 70 nahe dem Schalter 62 erzeugt wird, auf den Schalter 62 so ein, daß die Kontakte 64 und 66 aneinander anliegen bzw. geschlossen sind. In dieser Stellung der Kontakte 64 und 66 des Schalters 62 spricht das mit dem Schalter 62 verbundene Alarmgerät 72 nicht an. Wenn beispielsweise infolge eines Loches Wasser aus der Leitung 34' fließt, senkt sich der Schwimmer 50 in die unterste Stellung, wie in Fig. 3 dargestellt, wobei der an dem Stift 52 befindliche Magnet 70 um den gleichen Betrag nach unten sich verschiebt, so daß das magnetische Feld auf die Kontakte 64 und 66 des Schalter 62 nicht mehr länger einwirkt bzw. diese nicht mehr geschlossen hält.

Als Konsequenz davon dehnt sich die bisher durch die Kraft des magnetischen Feldes zusammengedrückte Feder 68 aus und öffnet somit die Kontakte 64 und 66, so daß mit dem in Reihe geschalteten Alarmgerät 72 ein Alarm gegeben wird. Dieser Alarm veranlaßt die Bedienungsperson zu der Maßnahme, das Flüssigkeitsstand-Meßsystem zu überprüfen und korrigierte Meßdaten einzugeben, wenn beispielsweise eine Prozeß-Steuerung angeschlossen ist. Auf diese Weise gibt die Alarmanordnung nach der vorliegenden Erfindung der Bedienungsperson ein Signal, daß das Differenzdruck-Meßgerät möglicherweise Fehlersignale produzieren könnte.

**Patentansprüche**

1. Flüssigkeitsstand-Meßsystem (10') für geschlossene Behälter (12') mit einem in Höhe des unteren Bereiches des Behälters angeordneten Differenzdruck-Meßgerät (26'), an das ein Anzeigegerät (38') zum Anzeigen von Meßwerten angeschlossen ist und das über eine ·Leitung (34') - eine sogenannte "Bezugssäule" - mit einem in Höhe des oberen Bereiches des Behälters angeordneten Sensorgehäuse (32') verbunden ist, das durch eine Balgfeder (40) in eine erste Kammer (42) und eine zweite Kammer (44) unterteilt ist, wobei die zweite Kammer (44) und die in diese einmündende, zum Differenzdruck-Meßgerät (26') führende Leitung (34') mit einer inkompressiblen Flüssigkeit gefüllt sind, dadurch gekennzeichnet, daß in der zweiten Kammer (44) ein Schwimmer (50) angeordnet ist, der mit einem an seiner Unterseite befestigten Stift (52) senkrecht in die mit "Bezugssäule" bezeichnete Leitung (34') frei beweglich eintaucht, daß der Schwimmers nach seinem Absinken die Einmündung der vom Sensorgehäuse (32') zum Differenzdruck-Meßgerät (26') führenden Leitung (34') abdichtet, wobei ein an dem Stift (52) befestigter Dauermagnet (70) einen außerhalb der Leitung (34') angeordneten Schalter (62) betätigt.

2. Flüssigkeitsstand-Meßsystem nach Anspruch 1, dadurch gekennzeichnet, daß die Balgfeder (40) einen Lippenrand (48) aufweist, der an der Grundplatte (30') des Sensorgehäuses (32') flüssigkeitsdicht befestigt ist.

3. Flüssigkeitsstand-Meßsystem nach Anspruch 2, dadurch gekennzeichnet, daß oberhalb des Lippenrandes (48) der Balgfeder (40) ein Käfig (54) befestigt ist, dessen Flansche (56) die Auftriebsbewegung des Schwimmers (50) in der mit Flüssigkeit gefüllten Balgfeder (40) begrenzen.

4. Flüssigkeitsstand-Meßsystem nach Anspruch 1, dadurch gekennzeichnet, daß der Schwimmer (50) aus einem dünnwandigen Metallgehäuse besteht, das mit einem geschäumten Kunststoff ausgefüllt ist.

5. Flüssigkeitsstand-Meßsystem nach Anspruch 1, dadurch gekennzeichnet, daß das Abdichten der Einmündung der Leitung (34') durch einen an dem Schwimmer (50) befestigten, weichelastischen O-Ring (58) erfolgt, der mit einem Teil seines Querschnitts in einer Rille (60) an der Unterseite des Schwimmers (50) angeordnet ist und sich an die Innenseite der Grundplatte (30') des Sensorgehäuses (32') legt.

6. Flüssigkeitsstand-Meßsystem nach Anspruch 1, dadurch gekennzeichnet, daß der an der Außenseite der Leitung (34') angeordnete Schalter (62) ein in einem abgeschlossenem Gehäuse befindlicher Zungenschalter (Reed-Schalter) ist, dessen Zungen (64, 66) vom Kraftfeld des Dauermagneten (70) beeinflußt werden.

7. Flüssigkeitsstand-Meßsystem nach Anspruch 6, dadurch gekennzeichnet, daß der Schalter (62) in Reihe mit einem Alarmgerät (72) geschaltet ist, das beim Ahsenken des Schwimmers (50) anspricht.

**Revendications**

1. Système de mesure du niveau d'un liquide (10') dans un réservoir fermé (12') comportant un dispositif de mesure d'une différence de pression (26'), disposé à hauteur de la partie inférieure du réservoir, auquel est relié un dispositif d'affichage (38') des valeurs mesurées et qui est relié au boîtier (32') d'un détecteur disposé à hauteur de la partie supérieure du réservoir, au moyen d'un conduit (34') - dit "colonne de référence" -, ledit boîtier étant divisé en une première chambre (42) et une seconde chambre (44) par un soufflet (40), un liquide incompressible remplissant la seconde chambre (44) et le conduit (34') qui y débouche conduisant au dispositif de mesure d'une différence de pression, caractérisé en ce qu'un flotteur (50), agencé dans la seconde chambre (44), se prolonge par une tige (52) fixée perpendiculairement à sa face inférieure qui plonge librement dans le conduit (34') appelé "colonne de reference", en ce que le flotteur, après sa descente, obture de façon étanche l'entrée du conduit (34') conduisant du boîtier (32) du détecteur au dispositif de mesure de différence de pression, et en ce qu'un aimant permanent (70), fixé à la tige (52), actionne un commutateur (62) agencé à l'extérieur du conduit (34').

2. Système de mesure du niveau d'un liquide selon la revendication 1, caractérisé en ce que le soufflet (40) comporte un bord à lèvre (48) qui est fixé de manière étanche sur le fond (30') du boîtier (32') du détecteur.

3. Système de mesure du niveau d'un liquide selon la revendication 2, caractérisé en ce qu'une cage (54) est fixée sur le bord à lèvre (48) du soufflet (40), une collerette (56) de ladite cage limitant le déplacement vers le haut du flotteur (50) à l'intérieur du soufflet (40) rempli de liquide.

4. Système de mesure du niveau d'un liquide selon la revendication 1, caractérisé en ce que le flotteur (50) comporte un corps métallique à paroi mince qui est rempli d'une mousse de matière plastique.

5. Système de mesure du niveau d'un liquide selon la revendication 1, caractérisé en ce que l'obturation de l'entrée du conduit (34') est assurée au moyen d'un joint d'étanchéité annulaire souple (58), fixe au flotteur (50), dont une partie de la section est disposée dans une gorge (60) formée sur la face inférieure du flotteur (50) et qui prend appui sur la face interne du fond (30') du boîtier (32').

6. Système de mesure du niveau d'un liquide selon la revendication 1, caractérisé, en que le commutateur (62) agencé à l'extérieur du conduit (34') est un commutateur sous ampoule scellée (commutateur Reed) dont les lames (64, 66) sont soumises à l'influence du champ magnétique de l'aimant permanent (70).

7. Système de mesure du niveau d'un liquide selon la revendication 6, caractérisé en ce que le commutateur (62) est monté en série avec un dispositif d'alarme (72) qui avertit de la descente du flotteur (50).

**Claims**

1. Liquid level measuring system (10') for closed containers (12') with a differential pressure measuring device (26') disposed at the level of the lower zone of the container, to which device an indicating device (38') for indicating measured values is connected and which device is connected via a pipe (34') - a so-called "reference column" - to a sensor housing (32') disposed at the level of the upper zone of the container, which housing is divided by a bellows spring (40) into a first chamber (42) and a second chamber (44), the second chamber (44) and the pipe (34') opening into it and leading to the differential pressure measuring device being filled with an incompressible liquid, characterised in that there is disposed in the second chamber (44) a float (50) which dips in a freely movable manner with a pin (52) attached to its underside vertically into the pipe (34') referred to as the "reference column", that the float, after sinking down, seals the mouth of the pipe (34') leading from the sensor housing (32') to the differential pressure measuring device (26'), a permanent magnet (70) attached to the pin (52) then actuating a switch (62) fitted outside the pipe (34').

2. A liquid level measuring device as claimed in Claim 1, characterised in that the bellows spring (40) has a lip edge (48) which is attached to the base-plate (30') of the sensor housing (32') in a liquid-tight manner.

3. A liquid level measuring system as claimed in Claim 2, characterised in that there is attached above the lip edge (48) of the bellows spring (40) a cage (54) whose flanges (56) limit the buoyancy movement of the float (50) in the liquid-filled bellows spring (40).

4. A liquid level measuring system as claimed in Claim 1, characterised in that the float (50) consists of a thinwalled metal housing which is filled with a plastic foam.

5. A liquid level measuring system as claimed in Claim 1, characterised in that the sealing of the mouth of the pipe (34') is effected by a soft elastic O ring (58) attached to the float (50), which ring (58) is disposed with part of its cross-section in a groove (60) on the underside of the float (50) and lays itself against the inside of the base-plate (30') of the sensor housing (32').

6. A liquid level measuring system as claimed in Claim 1, characterised in that the switch (62) fitted on the outside of the pipe (34') is an encapsulated reed switch whose reeds (64, 66) are influenced by the field of force of the permanent magnet (70).

7. A liquid level measuring system as claimed in Claim 6, characterised in that the switch (62) is connected in series with an alarm device (72) which operates when the float (50) sinks.

FIG. 1

FIG. 3

1

FIG. 2

ALARM

H₂O